# EUROPEAN PATENT APPLICATION

(11) **EP 3 707 998 A1**
(43) Date of publication of application: **16.09.2020**
(21) Application number: 18875663.9
(22) Date of filing: 12.10.2018
(51) Int. Cl.: A01K 1/01, E02F 3/02

(54) **APPARATUS FOR DISPOSING OF PET EXCREMENT**

(30) Priority: 09.11.2017 KR 20170148564; 26.07.2018 KR 20180086957
(71) Applicant: Jung, Sang Min, Paju-si, Gyeonggi-do (KR)
(72) Inventor: Jung, Sang Min, Paju-si, Gyeonggi-do (KR)
(74) Representative: Fortuna, Jevgenijs
(86) International application number: PCT/KR2018/012023
(87) International publication number: WO 2019/093664

(57) **Abstract**

A technical object of the present invention is to provide a disposal apparatus for pet excrement, which may be used for a purpose of filtering excrement or used for a purpose of scooping and supplying clean sand after completely collecting pet excrement together with sand. To this end, the disposal apparatus for pet excrement according to the present invention includes: a shovel having a plurality of filtering holes filtering excrement of a pet from sand; and an adjustment member slidably provided in the shovel in a front-rear direction and adjusting a size of the each filtering hole or selectively opening/closing the each filtering hole according to a sliding degree, and the adjustment member is placed on a bottom surface of the shovel, and a front end portion of the shovel is placed to protrude more forward than the adjustment member.

## Description

### Technical Field

The present invention relates to a disposal apparatus for pet excrement.

### Background Art

In general, among pets kept indoors, cats tend to dig soil or sand and cover their feces with soil or sand again, so most people raising cats indoors use a cat toilet apparatus of a type in which a bowl having an opened upper top is filled with sand.

Such an excrement apparatus is generally constituted by an excrement bowl having the opened top so that the sand is filled therein and a sand shovel filtering excrement by collecting the excrement in the excrement bowl together with the sand.

Here, the sand is a granular or powdery granular material, which is also called cat sand, and includes absorbent sand that absorbs moisture by itself such as natural sand, and solidified sand that absorbs moisture and is hardly solidified. The absorbent sand is silica gel, zeolite, etc., and as the solidified sand, a pellet made of bentonite or wood (or pulp) is representative.

Meanwhile, there is a problem in that since the cat covers the excrement with the sand after evacuating the excrement, a disposing operation of the excrement is difficult and in particular, as it is difficult to remove only sand at a portion soiled by the excrement, a lot of sand is consequently removed, an unnecessary sand removing operation and the resulting waste of the sand increases.

Further, since the sand is discarded for each excrement or entirely changed every 1 or 2 weeks, the amount of sand that becomes garbage becomes very large and mineral sand such as zeolite used as cat sand is treated as the garbage as the sand is made of a non-combustible material, there is a problem in that it is difficult to dispose the sand as the garbage.

As a result, in the sand shovel, a plurality of through holes through which the excrement does not pass and the sand passes is penetrated and formed in order to filter and dispose the excrement of the cat, which is buried in the sand filled in the excrement bowl.

However, as disclosed in Korean Patent Registration No. 10-1643879, since the conventional sand shovel is manufactured in a state in which the plurality of through-holes is constantly formed or manufactured in the form of a rake, there is a limit in that the excrement is completely collected when the excrement of the cat is collected together with the sand.

Further, in the conventional sand shovel, since the sand is discharged through the through-holes when new sand is replenished after disposing the excrement, there is a hassle of scooping and refilling the sand by further using a separate shovel.

### Prior Art

### Patent Document

Korean Patent Registration No. 10-1643879.

### Disclosure

### Technical Problem

A technical object of the present invention is to provide a disposal apparatus for pet excrement, which may be used for a purpose of filtering excrement or used for a purpose of scooping and supplying clean sand after completely collecting pet excrement together with sand.

### Technical Solution

In order to achieve the object, a disposal apparatus for pet excrement includes: a shovel having a plurality of filtering holes filtering excrement of a pet from sand; and an adjustment member slidably provided in the shovel in a front-rear direction and adjusting a size of the each filtering hole or selectively opening/closing the each filtering hole according to a sliding degree, and the adjustment member is placed on a bottom surface of the shovel, and a front end portion of the shovel is placed to protrude more forward than the adjustment member.

The front end portion of the shovel may have a shape in which the front end portion is gradually curved in an upward direction when viewed toward a side surface of the shovel.

The adjustment member may be slidably provided on the bottom surface of the shovel through one or more front-rear guide portions, and the front-rear guide portion may include a guide protrusion provided on the bottom surface of the shovel, a guide long hole provided in the adjustment member, inserted with the guide protrusion, and guiding forward-backward movement of the guide protrusion, a fall prevention member provided at a rear end of the guide protrusion, having a size larger than a horizontal width of the guide long hole, and contacting the bottom surface of the adjustment member, and a cap covering the guide long hole and having a depth so as to permit the forward-backward movement of the fall prevention member.

The one or more front-rear guide portions may include first and second front-rear guide portions provided at both sides of the front end portion of the adjustment member, respectively and a third front-rear guide portion provided at the center of a rear end portion of the adjustment member.

The plurality of filtering holes may not be formed at the front end portion of the shovel, but may be formed at a portion on the bottom surface of the shovel, which corresponds to the adjustment member.

The adjustment member may have respective through-holes corresponding to the respective filtering holes.

A length between both ends of the guide long hole may be determined so as to stop movement of the guide protrusion when the filtering hole and the through-hole completely coincide with each other while the guide protrusion moves along the guide long hole in any one direction and stop the movement of the guide protrusion when the filtering hole and the through-hole do not completely coincide with each other while moving in the remaining directions.

A handle may be provided at a rear end of the shovel, a movement button may be provided in the handle to be movable back and forth, and the movement button may interlock with the adjustment member.

A plurality of bottom depressions which is depressed in a direction opposite to a direction facing the adjustment member may be formed in the bottom surface of the shovel.

The each bottom depression may be formed between the respective filtering holes with an interval in the front-rear direction.

An inner surface of the each filtering hole has an inclined shape while forming an obtuse angle with respect to a top surface of the adjustment member.

The adjustment member may include a side guide portion placed on a side surface of the shovel, and one or more side depressions which are depressed in the direction opposite to the direction facing the side guide portion may be formed at a front portion of the side surface of the shovel.

The front portion may be a portion covered with the side guide portion when the side guide portion completely slides in a front direction and exposed to the outside when the side guide portion completely slides in a rear direction.

### Advantageous Effects

As described above, the disposal apparatus for pet excrement according to an embodiment of the present invention may have the following effects.

According to an embodiment of the present invention, the apparatus may include a shovel and an adjustment member and here, the shovel has a plurality of filtering holes for filtering excrement of a pet from sand and the adjustment member is provided slidably in the shovel in a fore-and-aft direction and provides a technical configuration of adjusting a size of each filtering hole according to a sliding degree or selectively opening/closing each filtering hole, and as a result, the excrement may be filtered through the plurality of filtering holes by completely scooping the excrement of the pet together with the sand and when a size of the excrement is small, the excrement can be prevented from passing through the filtering hole together with the sand by adjusting the size of the filtering hole to be small through the adjustment member and the excrement can be scooped and discarded together with the sand and clean sand can be scooped and supplied by completely blocking the filtering hole through the adjustment member. In particular, since provided is a technical configuration in which the adjustment member is placed on a bottom surface of the shovel and a front end portion of the shovel protrudes more forward than the adjustment member, it is possible to minimize the inflow of the sand or excrement between the shovel and the adjustment member while scooping the sand with the shovel.

Further, according to an embodiment of the present invention, since the front end portion of the shovel has a shape in which the front end portion is curved gradually in an upward direction when viewed toward the side of the shovel, the inflow of the sand or excrement between the shovel and the adjustment member while the sand is scooped with the shovel can be further reduced and the sand or excrement can be prevented from falling into the front end portion of the shovel while shaking the shovel in order to collect the excrement from the scooped sand.

In addition, according to an embodiment of the present invention, since front and rear guide portions are provided on the bottom surface of the shovel and the adjustment member corresponding thereto, it is possible to prevent a gap between the bottom surface of the shovel and the adjustment member from increasing while the adjustment member moves back and forth. When the gap between the bottom surface of the shovel and the adjustment member increases, the sand leaks due to the increase in gap or the sand is inserted into the gap, a forward-backward operation may be difficult. Further, since a guide long hole is blocked by a cap, it is possible to prevent the sand from flowing into the gap or being inserted into the gap.

In addition, according to an embodiment of the present invention, since provided is a technical configuration in which a plurality of bottom depressions is formed on the bottom surface of the shovel, frictional resistance between the bottom surface of the shovel and a top surface of the adjustment member, which is caused by the sand can be minimized while the sand which flows between the bottom surface of the shovel and the top surface of the adjustment member flows into each bottom depression without being inserted therebetween while the adjustment member slides, and as a result, the adjustment member can smoothly slide with respect to the bottom surface of the shovel.

Further, according to an embodiment of the present invention, since provided is a technical configuration in which an inner surface of a filtering hole has an inclined shape while forming an obtuse angle with respect to the top surface of the adjustment member, the sand cannot be accumulated between the inner surface of the filtering hole and the top surface of the adjustment member but smoothly moved the top surface of the shovel along the inclined inner surface while the sand is scooped with the disposal apparatus for pet excrement according to the present invention, thereby minimizing a phenomenon in which the sand remains in the disposal apparatus for pet excrement according to the present invention.

In addition, according to an embodiment of the present invention, since provided is a technical configuration in which one or more side depressions are formed at a front portion of the side of the shovel, the sand which flows between the side of the shovel and the side guide portion of the adjustment member flows into the side depression without being inserted therebetween while the adjustment member slides, and as a result, frictional resistance between the side of the shovel and a side guide portion of the adjustment member, which is caused by the sand can be minimized. Therefore, the adjustment member can smoothly slide with respect to the side of the shovel.

### Description of Drawings

FIG. 1 is a perspective view schematically illustrating a disposal apparatus for pet excrement according to a first embodiment of the present invention.
FIG. 2 is a right side view illustrating the disposal apparatus for pet excrement of FIG. 1.
FIG. 3 is a cross-sectional view of the disposal apparatus for pet excrement of FIG. 1.
FIG. 4 is a cross-sectional view of a main part schematically illustrating states before and after operations of a front-rear moving part and an adjustment member.
FIG. 5 is a bottom view illustrating the disposal apparatus for pet excrement of FIG. 1.
FIG. 6 is a cross-sectional view of a main part schematically illustrating a disposal apparatus for pet excrement according to a second embodiment of the present invention.
FIG. 7 is a diagram schematically illustrating a state (a) in which sand flows into a bottom depression of a shovel of FIG. 6 and a state (b) in which the sand of the bottom depression is removed.
FIG. 8 is a cross-sectional view of a main part schematically illustrating a disposal apparatus for pet excrement according to a third embodiment of the present invention.
FIG. 9 is a diagram schematically illustrating a state in which the sand is smoothly moved along an inclined inner surface of a filtering hole in FIG. 8.
FIG. 10 schematically illustrates a disposal apparatus for pet excrement according to a fourth embodiment of the present invention and is a cross-sectional view of a part substantially corresponding to part "A" of FIG. 2.
FIG. 11 is a diagram schematically illustrating a state (a) in which a side depression of a shovel is covered by a side guide portion of an adjustment member in FIG. 10 and a state (b) in which the side depression is exposed from the side guide portion.

### Modes of the Invention

Hereinafter, an embodiment of the present invention will be described more fully hereinafter with reference to the accompanying drawings so as to be easily implemented by those skilled in the art. However, the present invention may be modified in various different ways, all without departing from the spirit or scope of the present invention.

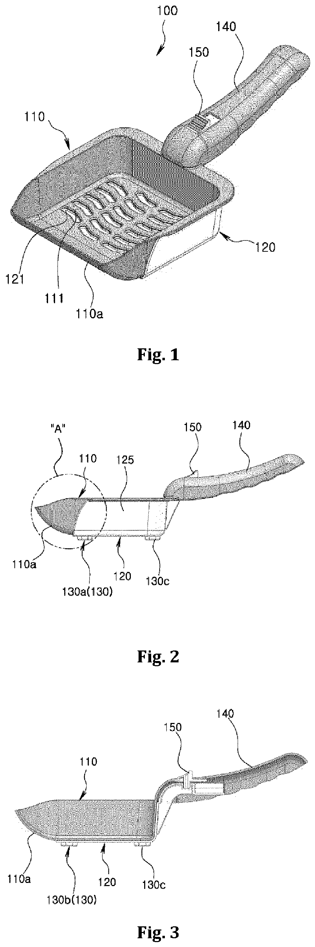

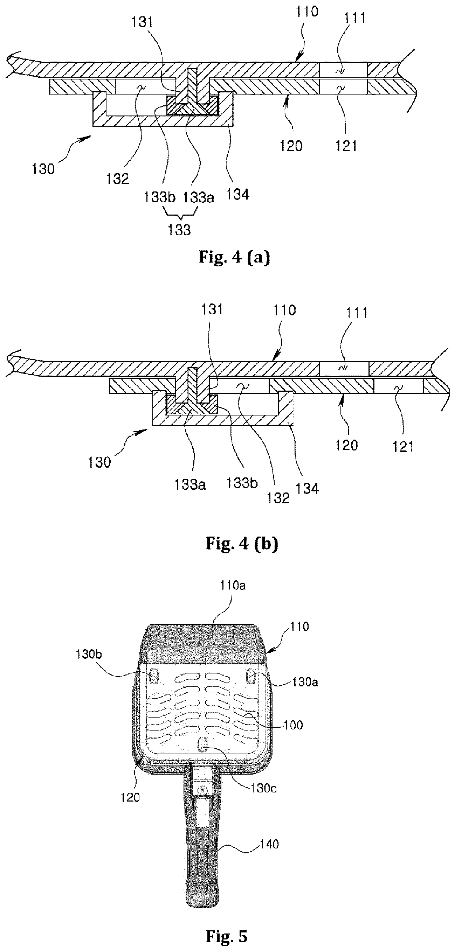

FIG. 1 is a perspective view schematically illustrating a disposal apparatus for pet excrement according to a first embodiment of the present invention, FIG. 2 is a right side view illustrating the disposal apparatus for pet excrement of FIG. 1, and FIG. 3 is a cross-sectional view of the disposal apparatus for pet excrement of FIG. 1. FIG. 4 is a cross-sectional view of a main part schematically illustrating states before and after operations of a front-rear moving part and an adjustment member and FIG. 5 is a bottom view illustrating the disposal apparatus for pet excrement of FIG. 1.

As illustrated in FIGS. 1 to 5, the disposal apparatus 100 for pet excrement according to the first embodiment of the present invention includes a shovel 110 and an adjustment member 120. Hereinafter, continuously referring to FIGS. 1 to 5, each component will be described in detail.

The shovel 110 as a component for scooping sand may have a plurality of filtering holes 111 for filtering excrement of a pet (e.g., cat) from the sand as illustrated in FIG. 1. For example, the shovel 110 may be made of a plastic injection material, etc. Further, as illustrated in FIGS. 1 to 3, a handle 140 may be provided at a rear end of the shovel 110.

Further, the plurality of filtering holes 111 may not be formed at a front end portion 110a of the shovel 110, but may be formed only at a portion on a bottom surface of the shovel 110, which corresponds to the adjustment member 120 on a bottom surface of the shovel 110 as illustrated in FIGS. 1 and 5.

The adjustment member 120 as a component for adjusting a size of each filtering hole 111 or selectively opening/closing each filtering hole 111 may be slidably in the shovel 110 in a front-rear direction as illustrated in FIGS. 3 and 4. In particular, the size of each filtering hole 111 or each filtering hole may be selectively opened/closed according to a sliding degree. For example, the adjustment member 120 may be made of the plastic injection material, etc. Further, as illustrated in FIG. 2, the adjustment member 120 may include a side guide portion 125 placed on the side of the shovel.

Further, as illustrated in FIGS. 4 and 5, respective through-holes 121 may be formed in the adjustment member 120, which correspond to the respective filtering holes 111. For example, the filtering hole 111 and the through-hole 121 which correspond to each other may have the same shape and the same size.

Accordingly, since the components are provided, the excrement may be filter through the plurality of filtering holes 111 while completely scooping the excrement of the pet together with the sand by using the shovel 110 and when the size of the excrement is small, the excrement may be prevented from passing through the filtering hole 111 together with the sand by adjusting the size of the filtering hole 111 to be small through the adjustment member 120 and the excrement may be scooped and discarded together with the sand and clean sand may be scooped and supplied by completely blocking the filtering hole 111 through the adjustment member 120.

Furthermore, as illustrated in FIGS. 1 to 5, the adjustment member 120 may be placed on the bottom surface of the shovel 110 and the front end portion 110a of the shovel 110 may protrude more forward than the adjustment member 120. Accordingly, it is possible to minimize the inflow of the sand or excrement between the shovel 110 and the adjustment member 120 while scooping the sand with the shovel 110.

Further, as illustrated in FIG. 2, the front end portion 110a of the shovel 110 may have a shape in which the front end portion 110a is curved gradually in the upward direction when viewed toward the side of the shovel 110. Accordingly, the inflow of the sand or excrement between the shovel 110 and the adjustment member 120 may be further reduced through the curved shape while scooping the sand with the shovel 110 and the sand or excrement may be prevented from falling into the front end portion 110a while shaking the shovel 110 in order to collect the excrement from the scooped sand.

Moreover, as illustrated in FIGS. 4 and 5, the disposal apparatus 100 for pet excrement according to the first embodiment of the present invention may further include one or more front-rear guide portions 130. The one or more front-rear guide portions 130 may serve to provide the adjustment member 120 slidably on the bottom surface of the shovel 110.

In particular, since the front-rear guide portions 130 are provided on the bottom surface of the shovel 110 and the adjustment member 120 corresponding thereto, the gap between the bottom surface of the shovel 110 and the adjustment member 120 while the adjustment member 120 moved back and forth may be prevented from increasing. Although not illustrated, when the gap between the bottom surface of the shovel and the adjustment member increases, the sand leaks due to the increase in gap or the sand is inserted into the gap, the forward-backward operation may be difficult.

For example, the one or more front-end guide portions 130 may include first and second front-rear guide portions 130a and 130b provided at both sides of the front end portion of the adjustment member 120, respectively and a third front-rear guide portion 130c provided at the center of a rear end portion of the adjustment member 120, as illustrated in FIG. 5. Therefore, the front end portion and the rear end portion, and both side portions of the adjustment member 120 may be in even close contact with the bottom surface of the shovel 110 through the first, second, and third front-rear guide portions 130a, 130b, and 130c, so that it is possible to maximally prevent the gap between the adjustment member 120 and the bottom surface of the shovel 110 from increasing.

Specifically, each front-end guide portion 130 may include a guide protrusion 131, a guide long hole 132, a fall prevention member 133, and a cap 134 as illustrated in FIG. 4.

The guide protrusion 131 may be provided to protrude on the bottom surface of the shovel 110. The guide long hole 132 as a component for guiding forward/backward movement of the guide protrusion 131 may be provided in the adjustment member 120 and the guide protrusion 131 may be inserted into the guide long hole 132. In particular, as illustrated in FIG. 4, so that when the filtering hole 111 and the through hole 121 completely match each other while the guide protrusion 131 moves in any one direction along the guide long hole 132, movement of the guide protrusion 131 is stopped (see FIG. 4(a))) and when the filtering hole 111 and the through hole 121 do not completely match each other while the guide protrusion 131 move in the remaining directions, the movement of the guide protrusion 131 is stopped (see FIG. 4(a)), a length between both ends may be determined.

The fall prevention member 133 as a component for preventing the guide protrusion 131 from falling into the guide long hole 132 may be provided at an end of the guide protrusion 131, may have a larger size than a horizontal width of the guide long hole 132 so as to prevent the guide protrusion 131 from falling, and may contact the bottom surface of the adjustment member 120. For example, as illustrated in FIG. 4, the fall prevention member 133 may include a bolt 133a fastened to the guide protrusion 131 in a longitudinal direction thereof and a friction prevention member 133b provided between the adjustment member 120 and a head of the bolt 133a and reducing the friction.

The cap 134 may cover the guide long hole 132 and have a depth so as to permit forward/backward movement of the fall prevention member 133. Further, since the guide long hole 132 is blocked by the cap 134, it is possible to prevent the sand from flowing into the gap or being inserted into the gap.

Furthermore, as illustrated in FIGS. 1 and 3, a movement button 150 may be provided in the handle 140 so as to move back and forth and the movement button 150 may interlock with the adjustment member 120. Accordingly, the movement button 150 is pushed with a thumb and moved to move the adjustment member 120 which interlocks therewith.

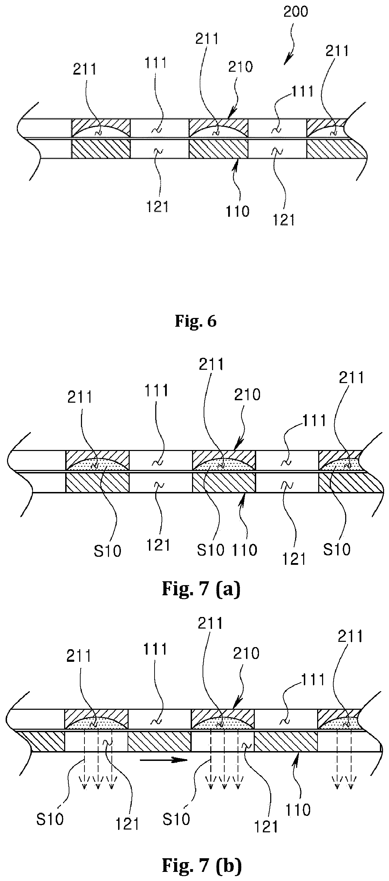

Hereinafter, a disposal apparatus 200 for pet excrement according to a second embodiment of the present invention will be described with reference to FIGS. 6 and 7.

FIG. 6 is a cross-sectional view of a main part schematically illustrating a disposal apparatus for pet excrement according to a second embodiment of the present invention. FIG. 7 is a diagram schematically illustrating a state (a) in which sand flows into a bottom depression of a shovel of FIG. 6 and a state (b) in which the sand of the bottom depression is removed.

The disposal apparatus 200 for pet excrement according to the second embodiment of the present invention is the same as that in the first embodiment of the present invention except that a plurality of bottom depressions 211 is further formed on the bottom surface of a shovel 210 as illustrated in FIGS. 6 and 7, so this will be primarily described below.

Each bottom depression 211 may be formed on the bottom surface of the shovel 210 and formed in a shape in which each bottom depression 211 is depressed in a direction opposite to a direction facing the adjustment member 120 as illustrated in FIGS. 6 and 7. Accordingly, sand S10 which flows between the bottom surface of the shovel 210 and the top surface of the adjustment member 120 is not inserted therebetween, but flows into each bottom depression 211 while the adjustment member 120 slides (see FIG. 7(a)), and as a result, the frictional resistance between the bottom surface of the shovel 210 and the top surface of the adjustment member 120, which is caused by the sand S10 may be minimized. Therefore, the adjustment member 120 may smoothly slide on the bottom surface of the shovel 210. In addition, as illustrated in FIG. 7(b), when the adjustment member 120 slides and the bottom depression 211 of the shovel 210 is placed to correspond to the through-hole 121 of the adjustment member 120, the sand S10 in the bottom depression 211 may leak to the outside through the through-hole 121.

For example, each bottom depression 211 may be formed between respective filtering holes 111 with an interval in a front-rear direction (a horizontal direction based on FIG. 6) in which the adjustment member 120 slides as illustrated in FIGS. 6 and 7.

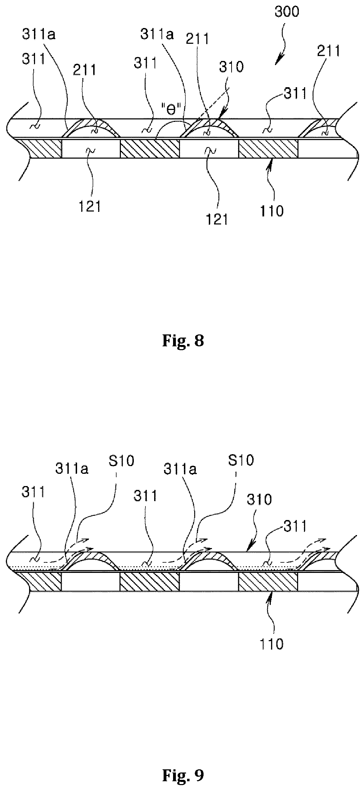

Hereinafter, a disposal apparatus 300 for pet excrement according to a third embodiment of the present invention will be described with reference to FIGS. 8 and 9.

FIG. 8 is a cross-sectional view of a main part schematically illustrating a disposal apparatus for pet excrement according to a third embodiment of the present invention and FIG. 9 is a diagram schematically illustrating a state in which the sand is smoothly moved along an inclined inner surface of a filtering hole in FIG. 8.

The disposal apparatus 300 for pet excrement according to the third embodiment of the present invention is the same as that in any one embodiment of the first and second embodiments of the present invention except for the shape of an inner surface 311a of a filtering hole 311 as illustrated in FIGS. 8 and 9, so the shape of the inner surface 311a of the filtering hole 311 will be primarily described below.

The inner surface 311a of each filtering hole 311 may have an inclined shape while forming an obtuse angle θ with respect to the top surface of the adjustment member 120 as illustrated in FIGS. 8 and 9.

Accordingly, while the sand is scooped with the disposal apparatus 300 for pet excrement of the present invention, the sand S10 is not accumulated between the inner surface 311a of the filtering hole 311 and the top surface of the adjustment member 120, but may smoothly move to the top surface of a shovel 310 along the inclined inner surface 311a as illustrated in FIG. 9, thereby minimizing a phenomenon in the sand remains in the disposal apparatus 300 for pet excrement of the present invention.

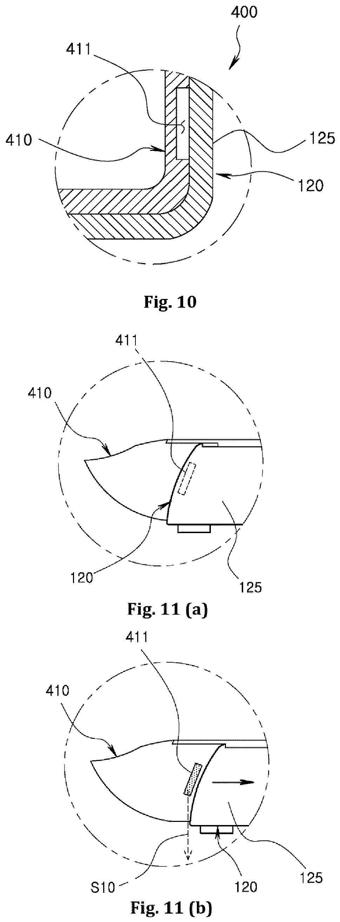

Hereinafter, a disposal apparatus 400 for pet excrement according to a fourth embodiment of the present invention will be described with reference to FIGS. 10 and 11.

FIG. 10 schematically illustrates a disposal apparatus for pet excrement according to a fourth embodiment of the present invention and is a cross-sectional view of a part substantially corresponding to part "A" of FIG. 2 and FIG. 11 is a diagram schematically illustrating a state (a) in which a side depression of a shovel is covered by a side guide portion of an adjustment member in FIG. 10 and a state (b) in which the side depression is exposed from the side guide portion.

The disposal apparatus 400 for pet excrement according to the fourth embodiment of the present invention is the same as that in any one embodiment of the first to third embodiments of the present invention except that a side depression 411 is further formed on the side surface of a shovel 410 as illustrated in FIGS. 10 and 11, so this will be primarily described below.

The side depression 411 may be formed at a front portion of the side surface of the shovel 410 and formed in a shape in which the side depression 411 is depressed in a direction opposite to a direction facing the side guide portion 125 as illustrated in FIGS. 10 and 11. Accordingly, the sand S10 which flows between the side surface of the shovel 410 and the side guide portion of the adjustment member 120 is not inserted therebetween, but flows into the side depression 411 while the adjustment member 120 slides, and as a result, the frictional resistance between the side surface of the shovel 410 and the side guide portion 125 of the adjustment member 120, which is caused by the sand S10 may be minimized. Therefore, the adjustment member 120 may smoothly slide on the side surface of the adjustment member 410.

As illustrated in FIG. 11, the front portion of the side surface of the shovel 410 may be a portion covered with the side guide portion 125 when the side guide portion 125 completely slides in a front direction (see FIG. 11(a)) and exposed to the outside when the side guide portion 125 completely slides in a rear direction (see FIG. 11(b)). In other words, the side depression 411 may be covered with the side guide potion 125 when the side guide portion 125 completely slides in the front direction as illustrated in FIG. 11(a) and exposed to the outside when the side guide portion 125 completely slides in the rear direction as illustrated in FIG. 11(b).

Accordingly, as illustrated in FIG. 11(b), when the side depression 411 is exposed to the outside from the side guide portion 125 by movement of the adjustment member 120, the sand S10 in the side depression 411 may leak to the outside.

While this invention has been described in connection with what is presently considered to be practical example embodiments, it is to be understood that the invention is not limited to the disclosed embodiments, but, on the contrary, is intended to cover various modifications and equivalent arrangements included within the spirit and scope of the appended claims.

### Industrial Applicability

Since the present invention has an advantage in that the excrement may be filtered through the plurality of filtering holes by completely scooping the excrement of the pet together with the sand and when a size of the excrement is small, the excrement can be prevented from passing through the filtering hole together with the sand by adjusting the size of the filtering hole to be small through the adjustment member and the excrement can be scooped and discarded together with the sand and clean sand can be scooped and supplied by completely blocking the filtering hole through the adjustment member, the present invention has an industrial applicability. In particular, since provided is a technical configuration in which the adjustment member is placed on a bottom surface of the shovel and a front end portion of the shovel protrudes more forward than the adjustment member, it is possible to minimize the inflow of the sand or excrement between the shovel and the adjustment member while scooping the sand with the shovel.

**Explanation of Reference Numerals and Symbols**

| | |
|---|---|
| 100, 200, 300, 400: Disposal apparatus for pet excrement | |
| 110, 210, 310, 410: Shovel | 125: Side guide portion of |
| | adjustment member |
| 110a: Front end portion of shovel | 111, 311: Filtering hole |
| 120: Adjustment member | 121: Through-hole |
| 130: Front-rear guide portion | 130a: First front-rear guide portion |
| 130b: Second front-rear guide portion | 130c: Third front-rear guide portion |
| 131: Guide protrusion | 132: Guide long hole |
| 133: Fall prevention member | 134: Cap |
| 140: Handle | 150: Movement button |
| 211: Bottom depression of shovel | 311a: Inner surface of filtering hole |
| 411: Side depression of shovel. | |

## Claims

1. A disposal apparatus for pet excrement, comprising:
a shovel having a plurality of filtering holes filtering excrement of a pet from sand; and
an adjustment member slidably provided in the shovel in a front-rear direction and adjusting a size of the each filtering hole or selectively opening/closing the each filtering hole according to a sliding degree,
wherein the adjustment member is placed on a bottom surface of the shovel, and
a front end portion of the shovel is placed to protrude more forward than the adjustment member.

2. The disposal apparatus for pet excrement of claim 1, wherein the front end portion of the shovel has a shape in which the front end portion is gradually curved in an upward direction when viewed toward a side surface of the shovel.

3. The disposal apparatus for pet excrement of claim 1, wherein the adjustment member is slidably provided on the bottom surface of the shovel through a front-rear guide portion, and
the front-rear guide portion includes
a guide protrusion provided on the bottom surface of the shovel,
a guide long hole provided in the adjustment member, inserted with the guide protrusion, and guiding forward-backward movement of the guide protrusion,
a fall prevention member provided at a rear end of the guide protrusion, having a size larger than a horizontal width of the guide long hole, and contacting the bottom surface of the adjustment member, and
a cap covering the guide long hole and having a depth so as to permit the forward-backward movement of the fall prevention member.

4. The disposal apparatus for pet excrement of claim 1, wherein the adjustment member has respective through-holes corresponding to the respective filtering holes.

5. The disposal apparatus for pet excrement of claim 1, wherein a plurality of bottom depressions which is depressed in a direction opposite to a direction facing the adjustment member is formed in the bottom surface of the shovel, and
the each bottom depression is formed between the respective filtering holes with an interval in the front-rear direction.

6. The disposal apparatus for pet excrement of claim 1, wherein an inner surface of the each filtering hole has an inclined shape while forming an obtuse angle with respect to a top surface of the adjustment member.

7. The disposal apparatus for pet excrement of claim 1, wherein the adjustment member includes a side guide portion placed on a side surface of the shovel, and
one or more side depressions which are depressed in the direction opposite to the direction facing the side guide portion are formed at a front portion of the side surface of the shovel.

8. The disposal apparatus for pet excrement of claim 7, wherein the front portion is a portion covered with the side guide portion when the side guide portion completely slides in a front direction and exposed to the outside when the side guide portion completely slides in a rear direction.
